# EUROPEAN PATENT SPECIFICATION

(11) **EP 0 220 813 B1**
(45) Date of publication and mention of the grant of the patent: **07.07.1993**
(21) Application number: 86306645.2
(22) Date of filing: 28.08.1986
(51) Int. Cl.: H01J 61/36, C03C 10/00, H01J 9/26, H01J 61/18

(54) **Method for sealing the discharge tubes of metal halide high pressure discharge lamps**
Verfahren zum Verschliessen von Entladungsrohren von Metallhalogenid-Hochdruckentladungslampen
Procédé pour sceller des tubes à décharge de lampes à décharge à halogénures à haute pression

(30) Priority: 03.09.1985 GB 8521809
(43) Date of publication of application: 06.05.1987
(73) Proprietor: GE LIGHTING LIMITED, Enfield, Middlesex EN1 1SB (GB)
(72) Inventor: Brown, Kenneth Edward, Ratby Leicester, LE6 ONN Leicestershire (GB); Caunt, Gary Kenneth, Thurmaston Leicester, LE4 8GG Leicesters (GB)
(74) Representative: Sanders, Peter Colin Christopher

(56) References cited:
- EP-A- 0 055 049
- EP-A- 0 060 582
- GB-A- 2 132 011
- US-A- 3 804 608
- PATENT ABSTRACTS OF JAPAN, unexamined applications, E field, vol. 9, no. 89, April 18, 1985, THE PATENT OFFICE JAPANESE GOVERNMENT, page 105 E 309

## Description

This invention relates to the manufacture of high pressure metal halide discharge lamps. More particularly the invention relates to a method of producing a metal halide discharge lamp having a ceramic arc tube and to a method of sealing electrically conducting cermet end closure members to arc tubes for such lamps. One of the problems facing the designer of a high pressure metal halide lamp intended for operation at low power 150 watts, and less is that of achieving adequate partial pressure of the metal halides, for example, the iodides, chlorides and bromides of tin, sodium indium and thallium. This generally requires the lamp to be arranged to operate at a relatively high minimum arc tube temperature (cool spot temperature) which becomes progressively more difficult to achieve as the designed input power of the lamp is reduced. Conventionally metal halide lamps utilise fused silica envelopes. On the other hand arc tubes made of light transmitting ceramic material, for example, polycrystalline alumina, sapphire or a spinel can withstand high temperatures, are less reactive than silica and can easily be made in small sizes. Ceramic arc tubes offer the potential of lamps operating at cool spot temperatures above 600°C and between 700°C and up to 1,000°C. The ability to operate at such high temperatures would enable the arc gap to be reduced, hence providing a more compact lamp. This would also mean the volt drop of the lamp could be reduced to between 80 to 130 volts. Thus the lamp could be run on commercially available control gear, for example, control gear which has been developed for use with high pressure sodium discharge lamp. For the first time, therefore, ceramic metal halide lamps could become commercially viable propositions.

A main problem in making high pressure metal halide lamps with ceramic arc tube (hereinafter referred to as ceramic lamps) of small dimensions say of the order 20 to 30mm in overall length with the arc gap 10 mm or less in length, is that of making the final seal without loss of volatile fill substances. Sealing such ceramic lamps involves heating parts of the ceramic arc tube to a high temperature, perhaps 1600°C and with such compact arc tubes the dose is only a short distance away. A further problem is that metal halide resistant sealing compositions comprising Mg0, Si0₂ and A1₂0₃, for example, those disclosed in our EPO publication 55049 produce glassy seals which soften at about 700^{o}C and, therefore, would appear to be unsuitable for use in lamps designed to operate between 700°C and 1,000°C.

In its broadest aspect the present invention provides a method of manufacturing a high pressure metal halide discharge lamp having an arc tube of light transmitting ceramic material, said lamp being adapted to operate between 700°C and up to about 1,000°C and have a fill comprising a metal halide dose, mercury and a rare gas and wherein at least one electrically conductive cermet end closure member is sealed to an end of the arc tube by means of a rapidly formed high softening temperature crystalline seal, said method comprising the steps of first forming a glassy seal and then converting the glassy seal to a crystalline seal.

In this specification where reference is made to a rapidly formed crystalline seal we mean that during formation of the seal it is not heated to a softened state for an excessive time which would allow the dose to escape. We do not exclude the possibility that the total sealing process may include longer periods during which the seal is not softened.

Sealing of the dose within the arc tube envelope during lamp manufacture can comprise various stages, however, the most important stage is the final sealing step which takes place after the dose has been placed in the arc tube. If this is not successful, the volatile dose can be partially or completely lost so that lamp operation is affected or leaking dose material could even contaminate the seal material as the seal is being formed.

According to a further aspect of the present invention there is provided a method of manufacturing a high pressure metal halide discharge lamp adapted to operate between 700°C and up to about 1000°C, the lamp including an arc tube of light transmitting ceramic material having a fill comprising a metal halide dose, mercury and rare gas; wherein the final sealing of the arc tube is accomplished by means of a final sealing step wherein sealing composition is formed into a glassy seal and then converted to a crystalline seal, the final sealing step being accomplished in less than four minutes so that loss of fill, is avoided.

According to yet a further aspect of the invention there is provided a high pressure metal halide discharge lamp adapted to operate between 700°C and up to 1000°C the discharge lamp comprising an arc tube of light transmitting ceramic material, electrodes spaced in said arc tube by an arc gap of less than 10mm, the arc tube containing a metal halide dose, mercury and a rare gas for starting the lamp sealed within the ceramic arc tube by electrically conductive cermet end closure members in which the electrodes are located, at least one of the cermet end closure members being sealed to the end of the arc tube by means of a rapidly formed high softening temperature cyrstalline seal.

As disclosed in our EPO publication No. 55049 glassy seals can be converted to a more refractory seal having a more crystalline structure. This can be accomplished by additional heat treatment for several hours at a temperature of up to 1,000°C. The components have to be held under pressure at about 700°C for 30 minutes followed by further heating still under pressure at 950°C for an hour or more. These processing times are roughly comparable with published patented processes for converting glasses to the crystalline state. In UK patent 1544779 processing times of between five and eight hours are mentioned while one or two hours is mentioned in UK patent 1048289. It is emphasised these two patents are not concerned with producing seals in metal halide lamps. During development work on producing high temperature operating ceramic metal halide lamps we have found that glassy seals can be converted to crystalline seals unexpectedly rapidly thereby allowing the complete production of crystalline seals in one and a half minutes or less. While it might be obvious that from a general production point of view that it would be desirable to reduce somewhat the processing times disclosed in our aforesaid EPO publication 55049 it is indeed surprising that it can be done in such a short space of time to produce rapidly formed crystalline seals. Even more surprising is the finding that arc tubes can stand the large amounts of heat required to melt the sealing material and applied to the arc tube in such a short period of time without cracking.

EP-A-60582 describes a gas discharge lamp formed from two or more parts, at least one of which consists of an oxidic material, which is bonded by a metal oxide (cermet) to a metallic material.

We have found that seals vary in their ability to convert from a glassy state to a fully crystalline state depending on their composition. In each case it is necessary to subject the glassy seals to a carefully controlled heating schedule. This should be arranged to subject the glassy seals to a temperature of at least 1125°C and up to about 1200°C. Maximum rate of conversion is found to take place at 1150+or-25°C and when fully crystalline some seals can withstand temperatures of between 1300°C and 1360°C without softening. Such seals are referred to herein as rapidly formed high softening temperature crystalline seals and this type of seal, therefore, is eminently suitable for use in metal halide discharge lamps wherein the temperature at the ends of the arc tube is of the order 1000°C.

According to the invention there is provided a method of manufacturing a high pressure metal halide discharge lamp having an arc tube of light transmitting ceramic material, said lamp being adapted to operate between 700°C and up to about 1000°C and having a fill comprising a metal halide dose, mercury and a rare gas and wherein at least one electrically conductive cermet end closure member is sealed to an end of the arc tube by means of a crystalline seal, said method comprising the steps of first forming a glassy seal from a sealing composition comprising MgO, SiO₂, Al₂O₃ sealing material, and then converting the glassy seal to the crystalline seal characterised in that the crystalline seal is formed by subjecting the glassy seal to a temperature of at least 1125°C and up to about 1200°C, and wherein the respective steps of forming the glassy seal and of converting the glassy seal to the crystalline seal have a combined time of less than 4 minutes.

One embodiment of the invention will now be described by way of example only and with reference to the accompanying drawings wherein:
Figure 1 shows an end closure assembly used in the invention,
Figure 2 shows diagrammatically the assembly of an end closure member to the end of a discharge arc tube used in practice of the invention,
Figure 3 is a heating schedule used to obtain glassy seals in the practice of the invention,
Figure 4 is a heating schedule to convert glassy seals to crystalline seals in accordance with the invention,
Figure 5 is a heating schedule which produces a crystalline seal in a single step.
Figure 6 is a shaped arc tube having one end only sealed in accordance with the invention, and
Figure 7 is a high pressure metal halide discharge lamp in accordance with the invention.

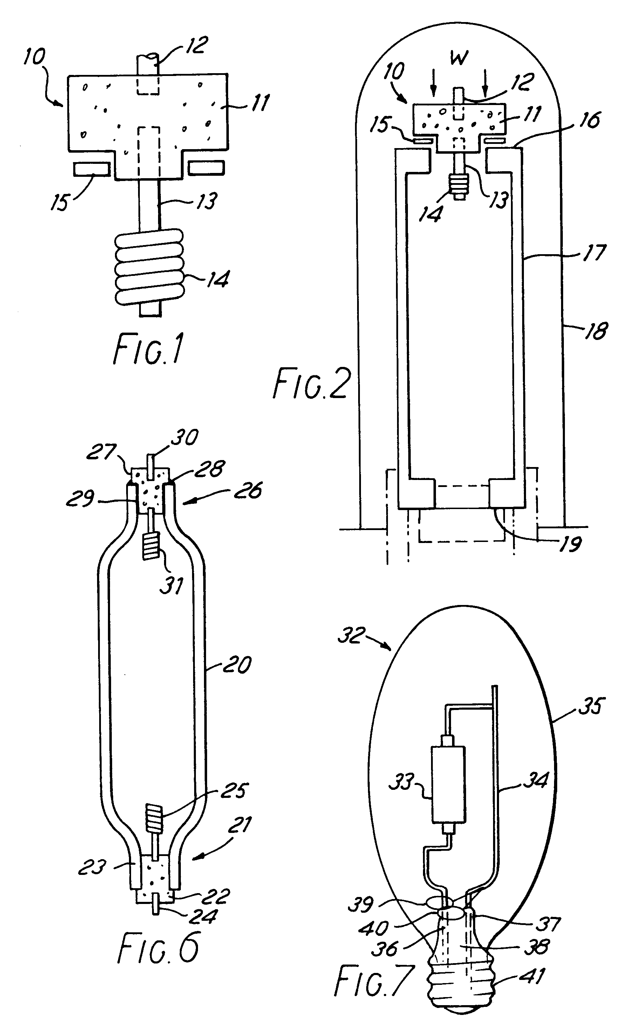

In Figure 1 there is shown an end closure assembly 10 comprising an electrically conducting cermet end closure member 11 having electrically conductive members 12 and 13 embedded therein. Member 12 forms a lead-in member and member 13 forms a shank support for electrode 14. Sealing glass or frit 15 comprising by weight 20% Al₂O₃; 28% MgO and 52% SiO₂ is pressed into a ring together with a PVA or other suitable binder. This binder is subsequently removed by baking in air. Ring 15 is deposited on cermet member 11 by premelting in a manner similar to that disclosed in our EPO publication 55049. Alternatively purification of the sealing composition to remove undesirable gases and substances can be done by heating under vacuum. As an alternative, frit ring 15 may be melted in situ with the arc tube.

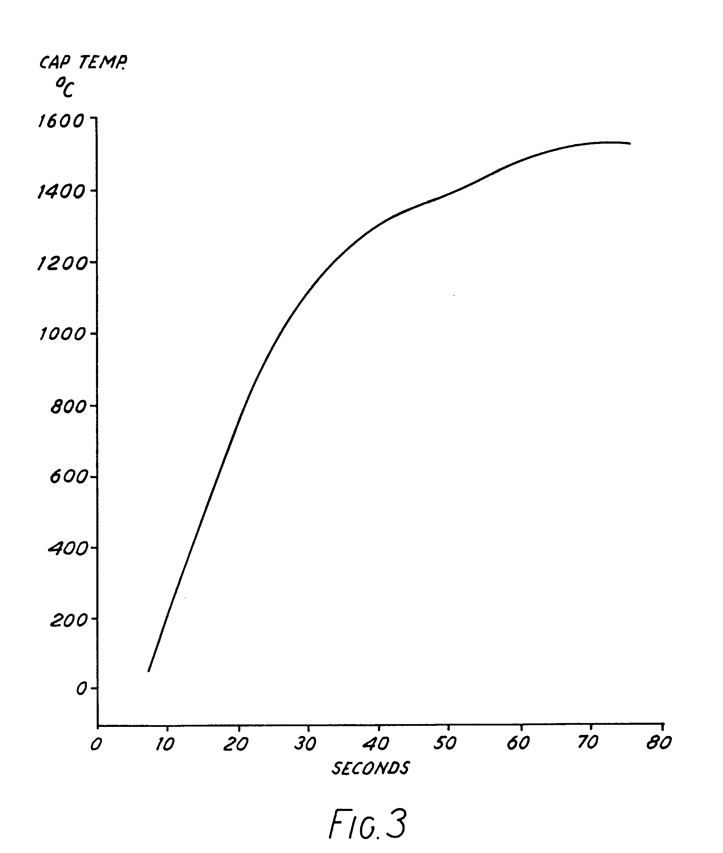

Cermet assembly 10 is placed loosely on top of first end 16 of an empty polycrystalline alumina arc tube 17 as shown in figure 2, that is, as yet no dose is placed within the arc tube 17. The ends of the arc tube have first been formed by having a ceramic sealing element sintered within the arc tube in a well known manner to form a monolith structure. Bell jar 18 is placed over the loose assembly of cermet member 11 and arc tube 17. The bell jar is then evacuated or may be filled with a rare gas such as argon. The cermet member 11 is maintained in position by application of load W as indicated by the arrows, which can be achieved by a simple weight or spring loaded device or equivalent such as bellows. The assembly is then heated, for example by RF power, within the bell jar 18 to a temperature of about 1500°C over a period of approximately 75 secs as per the heating schedule shown in Figure 3. This ensures the sealing composition 15 is heated to at least 1350°C which is necessary to form a glassy seal. The formed seal is then quenched by removing the heat and allowing the seal to cool naturally.

The discharge arc tube 17 complete with cermet end closure assembly 10 sealed thereto by a glassy seal is inverted and the selected metal halide dose placed within the arc tube. This dose comprises 6.4 mg/cc of arc tube volume of sodium iodiode; 1.4 mg/cc of thallium bromide; 0.43 mg/cc of mercuric iodide; 0.21/mg/cc of indium and includes mercury in an amount between 5 to 30 mg per cc of arc tube volume, and, of course, the addition of the rare gas, Argon, between 1 to 300 Torr to aid starting. Suitable metal halides are the iodides, chlorides and bromides of tin, sodium, indium and thallium. Other metal halides may be used provided they are chemically compatible with the ceramic arc tube. For compact arc tubes envisaged by the present invention; that is, arc tubes having overall lengths not greater than 30 mm and down to 20 mm with arc gaps between 5 to 8 mm and not greater than 10 mm, and with arc tube diameter of 7.35 mm the dose would be only 11 to 12 mm from the heating devices used in the sealing procedure which, of course, considerably exacerbates the volatilisation problem. Once the fill has been placed in the arc tube, cermet end closure assembly 10 plus sealing composition 15 is placed on top of the second end 19. The second end seal; that is the final seal, is then completed by first using the procedure described above for obtaining the first end glassy seal. By following this procedure the second end or final glassy seal can be produced also in 75 secs. This sealing time for a glassy seal is extremely short. It does not include a cooling period and, therefore, can be compared directly with the sealing time of four minutes disclosed in EPO publication No 55049. The extremely short sealing time allows the dose to be sealed successfully within the arc tube without loss of fill due to volatilisation despite the proximity of the heating devices. Although it is believed the success of the present invention is primarily due to the rapidity by which the final seal is made some heat sinking can be used to facilitate the process.

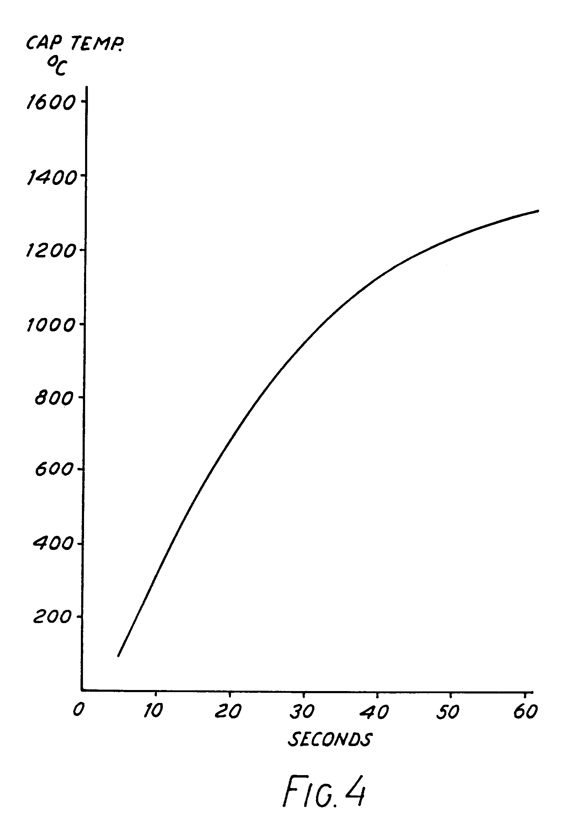

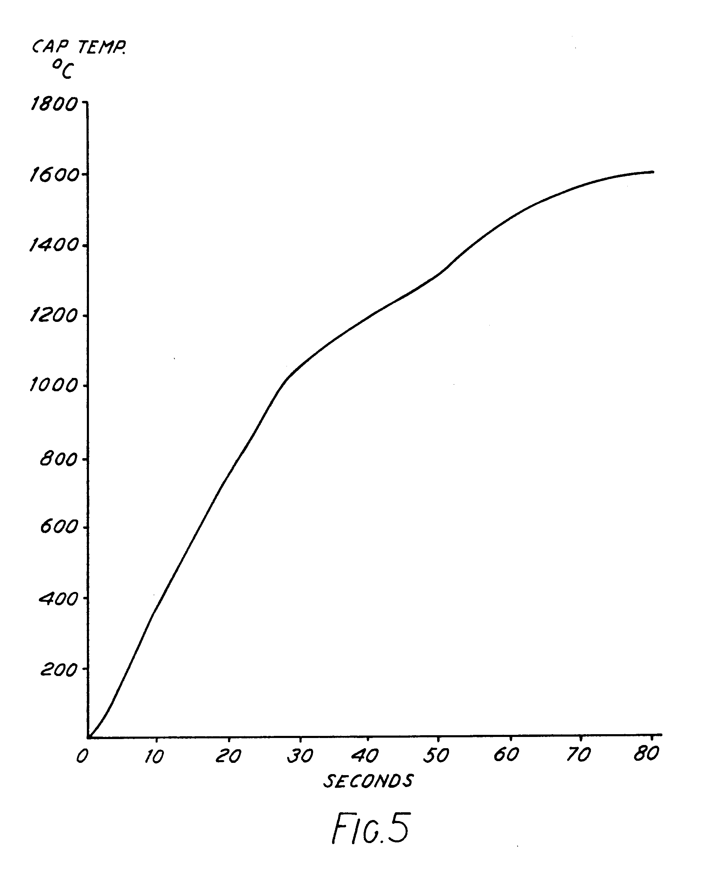

To complete the final seal the glassy seals are converted to high softening temperature crystalline seals by subjecting them to a further heating schedule as shown in Figure 4. This is to be carried out in an atmosphere of rare gas, for example, argon. It is essential that the glassy seal or seals be heated to a minimum temperature of 1125°C and up to about 1200°C. In this example the measured temperature at the top of the cermet member 11, that is the cap temperature, was taken up to 1300°C so that the required temperature at the seal was achieved. The particular heating schedule used for conversion is shown in Figure 4. Because the conversion is so rapid, taking place in the last 10 seconds of the overall heating schedule of 60 seconds, the volatile dose does not escape even though the seal material is heated to a relatively soft glassy state while being converted. Since the actual conversion from a glassy state to a crystalline state has been observed to take place in the last 10 seconds of the 60 seconds heating schedule we believe other heating schedules could be devised to achieve run-up to conversion more quickly. It is believed, therefore that the process of conversion from a glassy state to a crystalline state could be accomplished in less than one minute. This excludes the cooling period because although a cooling step may be included the rate of cooling is relatively unimportant. It may be desirable to have a continuous process wherein the two heating stages would be applied in sequence. In figure 5 there is shown a heating schedule which produces a crystalline seal in a single stage using a sealing composition sightly more refractory than the sealing compositions used with the heating schedules of figures 3 and 4. In this case the cap temperature was 1620°C and the single sealing step was completed in 80 seconds.

It is not essential that both ends of the arc tube are sealed using high softening-temperature crystalline seals. One end may be sealed by some other method, for example, direct sintering. Direct sintering of an electrically conductive cermet member to an insulating ceramic member in an end closure member for a discharge lamp is disclosed in our U.K. Patent 1571084. Direct sintering is also disclosed in the article "New structure of Ceramic Metal halide lamps there characteristics" by H. Kitagawa, S.Yamayaki and K. Takatsu of the Iwasaki Electric Company Limited, Japan presented at the I.E.S. Conference in Japan, May 27th 1985 which describes an investigation into an experimental metal halide lamp. The experimental lamp was life tested to 1,000 hours only and then analysed. On a lamp operating at between 800°C to 900°C damage to the lower end of the lamp is reported in the article as being very severe. In figure 6 shows there is shown an arc tube having one end sealed by direct sintering. In figure 6, reference numeral 20 is a shaped polycrystalline alumina arc tube having a first end 21 closed by means of an electrically conductive cermet member 22 sintered directly to the alumina arc tube wall 23. Cermet member is complete with lead in 24 and electrode 25. The other end 26 is made in accordance with the present invention wherein electrically conductive cermet end member 27 is sealed within the ends of the arc tube envelope by means of an MgO, SiO₂, A1₂O₃ sealing composition converted from a glassy seal to a crystalline seal represented by reference number 28 and thickened line 29. Cermet member 27 is also complete with lead in 30 and electrode 31. Prior to the second end 26 being sealed the metal halide dose, plus some mercury and rare gas is inserted within the arc tube 20. A shaped ceramic arc tube has the advantage of providing a useful shielding of the dose behind the electrode, in contrast to the squared off ones of the embodiment of figure 2.

In Figure 7 there is shown a high pressure metal halide discharge lamp 32 in accordance with the present invention. This comprises a polycrystalline alumina discharge arc tube 33 which can be either of the monolith structure or a shaped envelope as described and complete with sealed in metal halide dose, mercury and rare gas. Arc tube 33 is supported on a nickel frame 34 within outer elliptical envelope 35 which is of soft glass, for example, soda glass. The outer envelope 35 is evacuated. The frame 34 includes leads 36, 37 sealed within glass flare 38. Getter rings 39, 40 are included to remove impurities and Edison screw attachment 41 completes the assembly.

It is believed a wide range of sealing compositions comprising MgO, SiO₂, Al₂O₃ can be used in the practice of the present invention, for example, those sealing compositions disclosed in our EPO patent publication 55049. Preferred compositions comprise by weight from 51 to 62% SiO₂, from 13 to 21% Al₂O₃ and from 25 to 28% MgO. Also as disclosed therein the sealing compositions optionally may include up to 5% by weight of nucleating agents such as titania, zirconia or chromia to aid conversion, A particularly preferred composition by weight is 28.00% MgO, 20.00% Al₂O₃ and 52.00% SiO₂. Another preferred composition because it is more refractory is by weight 13.1% MgO; 33.2% Al₂O₃; 36.5% and between 17.2% to 20% zirconium which is used in the heating schedule shown in Figure 5. While we have used the term high softening-temperature crystalline seal the term is meant to include any predominant degree of crystallinity which results in a seal which softens at the high temperature of between 1300°C and 1360°C and does not soften at any lower temperature. It would be preferable if 100% crystallinity was obtained for all such high temperature seals.

Although it is not inconceivable that other methods of sealing may not be found in the future it is the considered opinion of the inventors that successful sealing of metal halide lamps, especially the higher operating temperature compact lamps of the present invention, successful sealing will depend very largely, if not completely, on the extremely short sealing times disclosed herein.

In the above description it will be appreciated that there will be variations in procedure depending on the actual ingredients of the sealing compositions used and lamp specification.

## Claims

1. A method of manufacturing a high pressure metal halide discharge lamp having an arc tube of light transmitting ceramic material, said lamp being adapted to operate between 700°C and up to about 1000°C and having a fill comprising a metal halide dose, mercury and a rare gas and wherein at least one electrically conductive cermet end closure member is sealed to an end of the arc tube by means of a crystalline seal, said method comprising the steps of first forming a glassy seal from a sealing composition comprising MgO, SiO₂, Al₂O₃ sealing material and then converting the glassy seal to the crystalline seal characterised in that the crystalline seal is formed by subjecting the glassy seal to a temperature of at least 1125°C and up to about 1200°C, and wherein the respective steps of forming the glassy seal and of converting the glassy seal to the crystalline seal have a combined time of less than 4 minutes.

2. A method according to claim 1, wherein the step of forming the glassy seal is completed within 75 seconds.

3. A method according to claim 1, wherein the step of converting the glassy seal to a crystalline seal is completed within one minute.

4. A method according to claim 1, 2 or 3, including the step of cooling the glassy seal prior to heating the glassy seal to convert it to a crystalline seal.

5. A method according to claim 1, 2 or 3, wherein the crystalline seal is formed in a single continuous step.

6. A method according to any one of claims 1 to 5, wherein the sealing of the arc tube is the final sealing step.

7. A method according to any one of claims 1 to 6, wherein the sealing composition includes up to 20% of nucleating agent selected from titania, zirconia or chromia.

8. A method according to any one of claims 1 to 7, wherein the length of the arc tube is not greater than 30mm.

## Patentansprüche

1. Verfahren zur Herstellung einer Metallhalogenid-Hochdruckentladungslampe mit einem Entladungsrohr aus lichtdurchlässigem Keramikmaterial, wobei die Lampe zwischen 700° C und bis etwa 1000° C betriebsfähig sein kann und eine Füllung aufweist, die eine Metallhalogeniddosis, Quecksilber und ein Edelgas umfaßt, und worin wenigstens ein elektrisch leitendes Cermet-Endverschlußelement an einem Ende des Entladungsrohres mittels einer kristallinen Dichtung abdichtend befestigt ist, wobei das Verfahren die Schritte aufweist, zuerst eine glasartige Dichtung aus einer Dichtungszusammensetzung, die M_{g}O-, SiO₂-, Al₂O₃-Dichtungsmaterial aufweist, zu bilden und dann die glasartige Dichtung in die kristalline Dichtung umzuwandeln, dadurch gekennzeichnet, daß die kristalline Dichtung gebildet wird, indem die glasartige Dichtung einer Temperatur von wenigstens 1125° C und bis zu etwa 1200° C ausgesetzt wird, und worin die jeweiligen Schritte des Bildens der glasartigen Dichtung und des Umwandelns der glasartigen Dichtung in die kristalline Dichtung in einer Gesamtzeit von weniger als 4 Minuten durchgeführt werden.

2. Verfahren nach Anspruch 1, worin der Schritt des Bildens der glasartigen Dichtung innerhalb von 75 Sekunden beendet ist.

3. Verfahren nach Anspruch 1, worin der Schritt des Umwandelns der glasartigen Dichtung in eine kristalline Dichtung innerhalb von einer Minute beendet ist.

4. Verfahren nach einem der Ansprüche 1, 2 oder 3, worin die glasartige Dichtung vor dem Erwärmen der glasartigen Dichtung beim Umwandeln in eine kristalline Dichtung einem Kühlschritt unterworfen wird.

5. Verfahren nach einem der Ansprüche 1, 2 oder 3, worin die kristalline Dichtung in einem einzigen ununterbrochenen Schritt gebildet wird.

6. Verfahren nach einem der Ansprüche 1 bis 5, worin das Versiegeln des Entladungsrohres der letzte Abdichtungsschritt ist.

7. Verfahren nach einem der Ansprüche 1 bis 6, worin die Dichtungszusammensetzung bis zu 20 % Keimbildungsmittel enthält, das aus Titandioxid, Zirkondioxid oder Chromoxid ausgewählt ist.

8. Verfahren nach einem der Ansprüche 1 bis 7, worin die Länge des Entladungsrohres nicht größer als 30 mm ist.

## Revendications

1. Un procédé pour fabriquer une lampe à décharge à halogénure métallique à haute pression comportant un tube à arc en une matière céramique transmettant la lumière, ladite lampe étant agencée pour fonctionner entre 700°C et jusqu'à environ 1000° C et comprenant un remplissage comportant une dose d'halogénure métallique, du mercure et un gaz rare, et dans lequel au moins un élément de fermeture d'extrémité en cermet électriquement conducteur est scellé à une extrémité du tube à arc au moyen d'un joint cristallin, ledit procédé comportant les phases consistant à former d'abord un joint vitreux à partir d'une composition de scellement comportant une matière de scellement comprenant MgO, SiO₂ et Al₂O₃ , puis à convertir le joint vitreux en un joint cristallin, caractérisé en ce que le joint cristallin est formé en soumettant le joint vitreux à une température d'au moins 1125 °C et jusqu'à environ 1200°C, et dans lequel les phases respectives de formation du joint vitreux et de conversion du joint vitreux en joint cristallin ont une durée combinée de moins de 4 minutes.

2. Un procédé selon la revendication 1, dans lequel la phase de formation du joint vitreux est effectuée en 75 secondes.

3. Un procédé selon la revendication 1, dans lequel la phase de conversion du joint vitreux en joint cristallin est effectuée en une minute.

4. Un procédé selon la revendication 1,2 ou 3, comportant la phase de refroidissement du joint vitreux avant le chauffage du joint vitreux pour convertir celui-ci en joint cristallin.

5. Un procédé selon la revendication 1, 2 ou 3, dans lequel le joint cristallin est formé dans une phase continue unique.

6. Un procédé selon l'une quelconque des revendications 1 à 5, dans lequel le scellement du tube à arc constitue la phase finale de scellement.

7. Un procédé selon l'une quelconque des revendications 1 à 6, dans lequel la composition de scellement comporte jusqu'à 20% d'un agent de nucléation sélectionné parmi le dioxyde de titane, la zircone ou l'oxyde de chrome.

8. Un procédé selon l'une quelconque des revendications 1 à 7, dans lequel la longueur du tube à arc n'est pas supérieure à 30 mm.
